# EUROPEAN PATENT SPECIFICATION

(11) **EP 0 431 370 B1**
(45) Date of publication and mention of the grant of the patent: **30.08.1995**
(21) Application number: 90121948.5
(22) Date of filing: 16.11.1990
(51) Int. Cl.: B01J 39/20, C08F 8/34

(54) **Process for the production of ion exchange resins**
Verfahren zur Herstellung von Ionenaustauscherharzen
Procédé pour la préparation de résines échangeuses d'ions

(30) Priority: 20.11.1989 US 438038
(43) Date of publication of application: 12.06.1991
(73) Proprietor: BAYER RUBBER INC., Sarnia, Ontario N7T 7M2 (CA)
(72) Inventor: Arsenault, Gilles Joseph, Ontario, Canada N0N 1HO (CA)
(74) Representative: von Kreisler, Alek, Dipl.-Chem.

(56) References cited:
- FR-A- 2 190 853

## Description

This invention provides a process for the preparation of an ion exchange resin which is characterized by having carbodithioate functionality. The present ion exchange resin is efficient when used to remove precious metals from chemical process streams.

Ion exchange is a well known, commercially practiced process and is widely reported in the open literature. A review of ion exchange technology is given in "Kirk-Othmer Cyclopedia of Chemical Technology" (3rd ed., Vol. 13, p. 678-705, by R.M. Wheaton and L.J. Lefevre, published by Wiley and Sons). As disclosed in the aforesaid Kirk-Othmer reference, conventional ion exchange resins normally have sulfonic acid functionality, but it is known to prepare ion exchange resins having other types of functional groups. For example, ion exchange resins having functional groups which chelate metals (e.g. thiols, amines) are used in the hydro-metallurgical industry. It is also known to prepare carbamate functionalized resins by reacting an amine functionalized resin with carbon disulfide (see Chemical Abstracts, vol. 102: 46764e). However, as will be apparent to those skilled in the art, the carbon-nitrogen bond reduces the stability of this functional group.

FR-A-2 190 853 discloses an ion exchange resin having carbodithioate functionality. The base copolymer is reacted with a halogenated alkyl ether compound in order to introduce a halogen onto the base copolymer. The halo-alkylation is achieved by a Friedel-Crafts reaction, in particular by a reaction of a base copolymer with methyl ether and chloromethyl ether in the presence of a lewis acid. Chloromethyl methyl ether or bis-(chloromethyl)ether are known as carcinogens (J. Am. Chem. Soc. 1990, 112, 8187-8188)
The problem underlying the invention is to be seen in the provision of a novel process for the introduction of a chloromethyl group.

The present invention provides a process according to claim 1. Preferred embodiments can be found in the dependant claims. The functional group of the present resin is stable, and is comparatively resistant to oxidation by air.

As used herein, the term "ion exchange resin" is meant to refer to its conventional meaning, namely a crosslinked polymer resin bead which typically has a particle size between 0.1 and 2.5 mm (dry basis), a bulk density of between 600 and 800 g/l (wet basis) and a functional group which makes it suitable for use in an ion exchange process. The ion exchange resin of the present invention is prepared by using a non-functionalized resin as the starting material, and treating it to provide carbodithioate functionality. It is not intended to limit the scope of this invention by any restriction relating to the use of any particular non-functionalized resin as the starting material. Any of the non-functionalized resins known to be suitable for preparing ion exchange resins may be principally employed, provided that said non-functionalized resins can be successfully treated to provide carbodithioate functionality. The use of a divinylbenzene-crosslinked-styrene copolymer resin ("S-DVB") is a preferred starting material. Typical examples of suitable S-DVB resins contain from 2 to 50 weight percent, especially from 15 to 30 weight percent, of bound divinylbenzene (with the balance consisting of bound styrene) and are crosslinked to the extent that they are insoluble in organic solvents. Most preferably, the starting materials is an S-DVB resins which is "macroreticular" (also referred to as "macroporous"). Macroreticular ion exchange resins have large pore volumes which are normally described as being greater than 0.7 ml/g. Highly preferred macroreticular resins are further characterized by having a porosity of greater than 45 percent (as measured by mercury porisimetry) and a BET surface area of 100 m²/g or higher.

The ion exchange resin prepared according to the process of this invention must contain carbodithioate functionality (i.e. 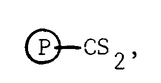
where 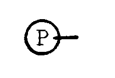
is the ion exchange resin used as the starting material). The term "carbodithioate functionality" is meant to clearly exclude carbazido functionality (i.e. the resin of the present invention must not contain carbon-nitrogen bonds in the functional group). Ion exchange resins having from 0.4 to 0.6 milliequivalents (meq) of CS₂/g of resin (dry basis) are preferred. Resins having a lower level of functionality may be used, but have a correspondingly lower level of adsorption capacity. Resins having a higher level of functionality are difficult to prepare in an economically viable manner. A method for the preparation of a carbodithioate functionalized resin is generally described below.

The method requires bromination and subsequent lithiation of a non-functionalized, followed by treatment with carbon disulfide.

The ion exchange resin starting material is initially brominated by contacting it with a bromine-containing solution.

The brominated ion exchange resin is lithiated by treatment with an organo-lithium reagent (such as n-butyl lithium).

The so-lithiated resin is then contacted with carbon disulfide to produce a final, carbodithioate functionalized ion exchange resin according to the present invention. Further details regarding each of the above procedures (i.e. bromination, lithiation, treatment with carbon disulfide) are given in the accompanying Examples.

The present ion exchange resin is suitable for the recovery of Group VIII metals and is surprisingly effective for the removal of rhodium containing catalysts (such as RhCl(PPh₃)₃ and HRh(PPh₃)₄) from chemical process streams. Furthermore, the present resin may be suitably employed in the process for the removal of other heavy metal ions (such as Ag, Cd, Hg, V or Cu) from organic or aqueous streams.

### Example 1

This example illustrates the preparation of an ion exchange resin having carbodithioate functionality.

The starting material was a non-functionalized, S-DVB resin (BioBeads™ SM16, Bio-Rad Laboratories). This resin was a "processed" grade (i.e. it was washed and screened by the supplier). The resin was reported to be macroreticular and to have a surface area of greater than 800 m²/g. A carbodithioate functionalized resin according to the present invention was prepared from this macroreticular resin by bromination, lithiation and treatment with carbon disulfide, as described below.

The initial bromination reaction was completed in a three necked, 1 l flask equipped with a reflux condenser, mechanical stirrer and dropping funnel. 20 g of the above macroreticular resin were added to the flask, together with 300 ml of methylene chloride and 0.5 g of ferric chloride. The mixture was stirred in darkness for 30 minutes, followed by the drop-wise addition of 30.3 g of bromine (dissolved in 55 ml of methylene chloride).

After stirring for a further hour in darkness, the mixture was heated to reflux for 4.5 hours and then stirred at room temperature overnight. The reaction mixture still had a red colour due to excess free bromine. Aqueous sodium bisulfite (5%, 100 ml) was carefully added to the solution with stirring. The resin was collected by filtration, washed with methylene chloride, acetone, acetone-water (2:1), acetone, benzene and methanol, and then washed in a Soxhlet extractor overnight using methylene chloride as a solvent. After drying under vacuum at 60°C, 28.6 g of pale beige resin was obtained.

Analysis of the brominated resin showed it to contain 30.5 weight percent bromine.

Lithiation of the brominated resin was then completed as follows: A mixture of 8.0 g of the above brominated resin and 100 ml of dry THF was put in a 500 ml three-necked flask fitted with a mechanical stirrer, a condenser and a rubber septum. The system was purged with nitrogen and maintained under nitrogen throughout the reaction. The mixture was cooled to 0°C and n-Butyl lithium in hexane (2.5 M in hexane, 30 ml) was added dropwise via a syringe. The reaction mixture was stirred at 0°C for 30 minutes and then at room temperature for 1 hour. This lithiated resin was used for the next step without isolation.

A solution of cuprous bromide and lithium bromide in THF was added to the above lithiated resin while keeping the mixture at a temperature of 0°C. Carbon disulfide was then added to the mixture to provide carbodithioate functionality (of the form 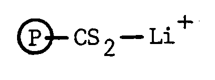
in view of the intermediate lithiation step).

### Example 2

This example illustrates the use of the carbodithioate functionalized resin described in Example 1 to remove rhodium from a viscous, rhodium-containing rubber solution.

The rubber solution was prepared by the homogeneous hydrogenation of a chlorobenzene solution of acrylonitrile-butadiene rubber, using HRh(PPh₃)₄ catalyst and triphenylphosphine cocatalyst. Further details regarding this type of hydrogenation process are provided in U.S. patent 4,464,515. The solution was then diluted with a minor amount of chlorobenzene to provide a 6 percent solution (i.e. weight hydrogenated rubber/weight solvent basis).

The capability of the carbodithioate resin of Example 1 to remove rhodium from the above rubber solution was then tested in the experiment described below.

150 ml of the rubber solution was added to a stirred, 500 ml three necked flask, together with 0.5 grams of the resin described in Example 1. This reaction mixture was stirred and refluxed under nitrogen for 5 hours. The resin was then removed from the mixture by filtration. The rubber was then recovered by evaporation of the solvent in a rotary evaporator, followed by drying in a reduced pressure oven at 60°C. A sample of the recovered rubber was analyzed for Rh content by atomic absorption spectroscopy and found to contain 9.2 ppm Rh.

In a comparative experiment, the rubber from an untreated, 150 ml sample of the rubber solution was recovered by the evaporation/drying procedures described above. The rubber from the control experiment was analyzed by atomic absorption spectroscopy and found to contain 104 ppm Rh.

Thus, a comparison between the results of the inventive and comparative experiments indicates that 91 percent of the available rhodium was removed by the inventive resin.

### Example 3

The procedures described in Example 1 for the preparation of the inventive carbodithioate functionalized resin were repeated to prepare a "duplicate" ion exchange resin.

The duplicate ion exchange resin was then used to treat another 150 ml sample of the rhodium-containing rubber solution, also as described in Example 2.

The rhodium content of the rubber recovered from the experiment of this Example was determined to be 5.8 ppm, indicating that 94 percent of the rhodium was removed by the inventive resin.

### Example 4

The procedures described in Example 1 for the preparation of the inventive carbodithioate functionalized resin were repeated, except that the starting material was an "unprocessed" grade of resin (i.e. the starting material was a macroreticular, S-DVB resin obtained from Bio-Rad Laboratories, but it was not pre-washed and screened by the supplier prior to shipment).

Elemental analysis was completed on the final carbodithioate functionalized resin. The functionalized resin was found to contain 3.1 weight percent sulfur, from which it can be calculated that the resin had a degree of functionalization of 0.48 milliequivalents of CS₂ per gram of dry resin.

A rhodium-containing, hydrogenated acrylonitrilebutadiene rubber solution was prepared according to the hydrogenation process described in Example 2. Analysis of rubber recovered from this solution showed it to contain 60.9 ppm of rhodium.

The ion exchange resin of this Example was then used to treat a 150 ml sample of this rubber solution, using the procedures described in Example 2.

The rhodium content of the rubber recovered from the experiment of this Example was 7.9 ppm, indicating that 87 percent of the rhodium was removed.

## Claims

1. A process for the preparation of an ion exchange resin which has carbodithioate functionality wherein a non-functionalized macroreticular resin having an average particle size of from 0.1 to 2.5 mm (dry basis) and a porosity of greater than 45 percent is functionalized, characterized in that the functionalizing is performed by subjecting said resin to bromination, subsequent lithiation and final treatment with carbon disulphide.

2. The process of claim 1, characterized in that said lithiation consists of treatment with n-butyl lithium.

3. The process of claims 1 and 2, characterized in that the functionalized resin has from 0.4 to 0.6 milliequivalents of carbodithioate functionality per gram (dry basis).

4. The process of claim 1 characterized in that the non-functionalized macroreticular resin is a styrene-divinylbenzene copolymer which contains from 15 to 30 weight percent of bound divinylbenzene.

## Patentansprüche

1. Verfahren zur Herstellung eines Ionenaustauscherharzes mit einer Carbodithioat-Funktionalität, worin ein nichtfunktionalisiertes makroporöses Harz mit einer durchschnittlichen Teilchengröße von 0,1 bis 2,5 mm (Bezugsbasis Trockenmasse) und einer Porosität von 45 % funktionalisiert wird, dadurch gekennzeichnet, daß das Funktionalisieren durchgeführt wird, indem das Harz einer Bromierung, anschließend einer Lithiierung und einer Endbehandlung mit Kohlenstoffdisulfid unterworfen wird.

2. Verfahren nach Anspruch 1, gekennzeichnet dadurch, daß die Lithiierung aus der Behandlung mit n-Butyllithium besteht.

3. Verfahren nach den Ansprüchen 1 und 2, gekennzeichnet dadurch, daß das funktionalisierte Harz eine Carbodithioat-Funktionalität von 0,4 bis 0,6 Milliäquivalent Carbodithioat pro Gramm (Bezugsbasis Trockenmasse) aufweist.

4. Verfahren nach Anspruch 1, dadurch gekennzeichnet, daß das nichtfunktionalisierte makroporöse Harz ein Styrol-Divinylbenzol-Copolymer ist, das 15 bis 30 Gew.-% gebundenes Divinylbenzol enthält.

## Revendications

1. Procédé pour la préparation d'une résine échangeuse d'ions, gui a une fonctionnalité carbodithioate, dans lequel une résine macroréticulaire non fonctionnalisée ayant un diamètre moyen de particules de 0,1 à 2,5 mm (sur base sèche) et une porosité supérieure à 45 pour cent est fonctionnalisée, caractérisé en ce que la fonctionnalisation est effectuée en soumettant ladite résine à une bromation, ensuite à une lithiation et, finalement, à un traitement avec du disulfure de carbone.

2. Procédé suivant la revendication 1, caractérisé en ce que la lithiation consiste en un traitement avec du n-butyl-lithium.

3. Procédé suivant les revendications 1 et 2, caractérisé en ce que la résine fonctionnalisée à 0,4 à 0,6 milliéquivalent de fonctionnalité carbodithioate par gramme (sur base sèche).

4. Procédé suivant la revendication 1, caractérisé en ce que la résine macroréticulaire non fonctionnalisée est un copolymère styrène-divinylbenzène qui contient 15 à 30 pour cent en poids de divinylbenzène lié.
